# EUROPEAN PATENT APPLICATION

(11) **EP 1 441 541 A2**
(43) Date of publication of application: **28.07.2004**
(21) Application number: 03256928.7
(22) Date of filing: 31.10.2003
(51) Int. Cl.: H04N 13/00

(54) **Apparatus and method for displaying three-dimensional image**

(30) Priority: 31.10.2002 JP 2002318207
(71) Applicant: Pioneer Corporation, Tokyo-to (JP)
(72) Inventor: Tomisawa, Isao, c/o Pioneer Corporation, Saitama-ken (JP); Aizawa, Koki, c/o Pioneer Corporation, Saitama-ken (JP)
(74) Representative: Townsend, Victoria Jayne

(57) **Abstract**

A display apparatus comprises a three-dimensional display device, an image generation device, an image specification device and a control device. The three-dimensional display device has a plurality of display surfaces. The image generation device generates images to be displayed on the three-dimensional display device. The image specification device enables at least part of an image, which is displayed on the three-dimensional display device, to be specified. The control device controls the three-dimensional display device to display, of the images generated, an image portion specified by the image specification device, on one of the plurality of display surfaces and display, of the images generated, an image portion, which is not displayed on the one of the plurality of display surfaces, on another display surface of the plurality of display surfaces.

## Description

### BACKGROUND OF THE INVENTION

### Field of the Invention

The present invention relates to a display apparatus comprising a three-dimensional display device having a plurality of display surfaces and belongs to the technical field of display apparatuses and methods capable of controlling images displayed on their respective display surfaces and displaying the images three-dimensionally.

### Description of the Related Art

As conventional apparatuses capable of displaying images three-dimensionally, various types of such apparatuses are proposed or commercialized. For example, as an electrically rewritable apparatus capable of displaying moving images three-dimensionally, a liquid crystal shutter-glasses system, etc., is well known. This liquid crystal shutter-glasses system takes pictures of a three-dimensional object using a camera from different directions, combines image data including parallax information obtained into one image signal, inputs the signal to a two-dimensional display apparatus and displays it. An observer wears liquid crystal shutter-glasses, which, for example, allow light to pass through the right eye-liquid crystal shutter and cause the left eye-liquid crystal shutter to shield light for odd fields. On the other hand, the liquid crystal shutter-glasses allow light to pass through the left eye-liquid crystal shutter and cause the right eye-liquid crystal shutter to shield light for even fields. At this time, an image for the right eye is displayed in odd fields in synchronization with an image for the left eye in even fields so that the observer watches the images including parallax between the right eye and left eye through the respective eyes, and thereby obtains a three-dimensional image.

Furthermore, there is a three-dimensional display apparatus, which includes a plurality of two-dimensional display apparatuses that are disposed in tandem in a direction of the line of sight of the observer, allows the observer to watch those images displayed overlapped and thereby recognize the overlapped image as a three-dimensional image though those images are discrete images in the depth direction. On the other hand, there is a three-dimensional display apparatus, which provides variations for brightness of images displayed on two-dimensional display apparatuses to eliminate the situation of those discrete images so that the observer feels as if the object exists at a midpoint of discrete positions and has more naturally a feeling in three dimensions. For example, there is a proposal of a brightness modulation type three-dimensional display system which displays images of an object from a plurality of display apparatuses overlapped with one another using a plurality of half-mirrors and allows a semi-transparent object to be displayed or allows an object behind to be seen through, as described for example in Japanese Laid-Open Patent Application No. 2000-115812.

However, these three-dimensional display systems are intended to enables an observer to watch three-dimensionally an image, which is provided through software given or actually taken by a camera, thus being unilateral in the sense that it is not possible to construct any mutual relationship with an observer. More specifically, it is impossible for an observer to access the image as displayed to change its display state or provide the position in which the three-dimensional image is to be displayed, with information to utilize it as an operational device.

An object of the present invention, which was made in order to solve the above-mentioned problems, is to provide a display apparatus, e.g. the three-dimensional display apparatus, which includes a plurality of display devices that are disposed in tandem in a direction of the line of sight of an observer, and can be adapted for an electronic device, as an operation device, which is visually recognizable and easily operable by giving a certain significance to the position in which the three-dimensional image is to be displayed or making a change in such a position in accordance with any significance, on the one hand, and a method for displaying the three-dimensional image utilizing such a display apparatus, on the other hand.

### SUMMARY OF THE INVENTION

In order to solve the above described problems, the display apparatus according to one aspect of the present invention, comprises: a three-dimensional display device having a plurality of display surfaces; an image generation device for generating images to be displayed on the three-dimensional display device; an image specification device for enabling at least part of an image, which is displayed on the three-dimensional display device, to be specified; and a control device for controlling the three-dimensional display device to display, of the images generated, an image portion specified by the image specification device, on one of the plurality of display surfaces and display, of the images generated, an image portion, which is not displayed on said one of the plurality of display surfaces, image portion, on another display surface of the plurality of display surfaces.

In order to solve the above described problems, the display apparatus according to another aspect of the present invention comprises: a three-dimensional display device having a plurality of display surfaces; an image generation device for generating images to be displayed on the three-dimensional display device; and a control device for controlling the three-dimensional display device to display, of the images generated, an image portion determined based on results of a determination of predetermined items or a conditional branch, on one of the plurality of display surfaces and display, of the images generated, an image portion, which is not displayed on said one of the plurality of display surfaces, on another display surface of the plurality of display surfaces.

In order to solve the above described problem, the method according to further another aspect of the present invention for displaying a three-dimensional image utilizing a display apparatus, which comprises a three-dimensional display device having a plurality of display surfaces and an image specification device for enabling at least part of an image, which is displayed on the three-dimensional display device, to be specified, comprises: an image generating step for generating images to be displayed on the three-dimensional display device; and a controlling step for controlling the three-dimensional display device to display, of the images generated, an image portion specified by the image specification device on one of the plurality of display surfaces and display, of the images generated, an image portion, which is not displayed on said one of the plurality of display surfaces, on another display surface of the plurality of display surfaces.

In order to solve the above described problem, the method according to further another aspect of the present invention for displaying a three-dimensional image utilizing a display apparatus, which comprises a three-dimensional display device having a plurality of display surfaces, comprises: an image generating step for generating images to be displayed on the three-dimensional display device; and a controlling step for controlling the three-dimensional display device to display, of the images generated, an image portion determined based on results of a determination of predetermined items or a conditional branch, on one of the plurality of display surfaces and display, of the images generated, an image portion, which is not displayed on said one of the plurality of display surfaces, on another display surface of the plurality of display surfaces.

The operations and other advantages of the present invention will become more apparent from the embodiments described below.

### BRIEF DESCRIPTION OF THE DRAWINGS

FIG. 1 is a block diagram showing a display apparatus according to the first example of the present invention;
FIG. 2 is a schematic descriptive view showing another structure of the display section of the display apparatus according to the present invention;
FIG. 3(a) is a front view showing an example of image displayed on the display apparatus according to the first example, FIG. 3(b) is a front view showing another example thereof and FIG. 3(c) is a front view showing further another example thereof;
FIG. 4(a) is a schematic descriptive view illustrating a display example of the display apparatus according to the first example in an initial state and FIG. 4(b) is a schematic descriptive view illustrating the same in a state in which an image has been selected;
FIG. 5(a) is a schematic descriptive view illustrating a realistic display example of the display apparatus according to the first example in an initial state and FIG. 5(b) is a schematic descriptive view illustrating the same in a state in which an image has been selected;
FIG. 6 is a flow chart showing a flow of operations of the display apparatus according to the first example of the present invention;
FIG. 7 is a block diagram showing the display apparatus according to the second example of the present invention;
FIG. 8 is a front view illustrating a display example in the display apparatus according to the second example of the present invention;
FIG. 9(a) is a front view illustrating a display image on the display section, which is disposed on the front side in the display example in the display apparatus according to the second example of the present invention and FIG. 9(b) is a front view illustrating a display image on the display section, which is disposed on the rear side therein;
FIG. 10 is a flow chart showing a flow of operations of the display apparatus according to the second example of the present invention;
FIG. 11 is a block diagram showing the display apparatus according to the third example of the present invention;
FIG. 12(a) is front view illustrating a display image prior to the switching, in the display example in the display apparatus according to the third example of the present invention and FIG. 12(b) is a front view illustrating a display image after the switching, in the display example therein;
FIG. 13 is a flow chart showing a flow of operations of the display apparatus according to the third example of the present invention;
FIG. 14 is a schematic descriptive view illustrating the display apparatus according to the fourth example of the present invention; and
FIG. 15 is a schematic descriptive view illustrating the display apparatus according to the fifth example of the present invention.

### DETAILED DESCRIPTION OF THE PREFERRED EMBODIMENTS

Embodiments of the present invention will be described below.

The first embodiment of the display apparatus according to the present invention comprises a three-dimensional display device having a plurality of display surfaces; an image generation device for generating images to be displayed on the three-dimensional display device; an image specification device for enabling at least part of an image, which is displayed on the three-dimensional display device, to be specified; and a control device for controlling the three-dimensional display device to display, of the images generated, an image portion specified by the image specification device, on one of the plurality of display surfaces and display, of the images generated, an image portion, which is not displayed on said one of the plurality of display surfaces, image portion, on another display surface of the plurality of display surfaces.

According to the first embodiment of the display apparatus of the present invention, images are displayed on the three-dimensional display device having a plurality of display surfaces, those images are overlapped with one another, thus enabling an observer to watch the image three-dimensionally. The image generation device generates or stores images to be displayed and supplies the images to the three-dimensional display device so that the images are displayed on the respective display surfaces. The image generated by the image generation device is composed of image portions, which are controlled in the minimum image unit. There are for example a plurality of or many image portions, these image portions are combined together to form a single frame image and this image is displayed.

The image specification device includes a touch screen, etc., and specifies an image portion through a user's external input operation. Alternatively, the image specification device specifies the image portion in accordance with an access from a controller of various electronic devices such as an audio/video device or a car navigation apparatus in which the display apparatus is originally or optionally mounted. Then, the specified image portion is displayed on one display surface, for example, on the front-side display surface closest to the observer. On the other hand, other images are displayed on the other display surfaces, for example, on the back display surface. In this way, a three-dimensional image is obtained between images displayed on the display surfaces, which are placed apart from each other by a predetermined distance on the line of sight of the observer. Furthermore, it is also possible to set the image specification device so as to specify images on any one of the plurality of display surfaces. However, it is preferable to make a setting for the front-side display surface (that is, the display surface, which is closest to the observer), in view of the fact that the display surface, which is the closest to the observer, provides the most recognizable effects in vision or sense.

For example, when an image portion is specified through a user's external input operation utilizing the image specification device, which includes a touch screen, etc., there is available the displayed image as if the image portion as specified by the user, which includes the operation (touch) screen and buttons provided therein, is floating in the air. Alternatively, in case where an image portion is specified according to access from the controller of various electronic devices, for example, for informing of a remaining amount of a tape during a video recording, it is possible to provide a displayed image as if the "elapsed time" on the display surface is floating in the air toward the user.

According to the display apparatus according to the first embodiment of the present invention, a certain significance is given to the position in which the three-dimensional image is to be displayed, or a change is made in such a position in accordance with any significance, thus making it possible to provide a visually recognizable three-dimensional image, unlike provision of the normal three-dimensional image. Furthermore, the above-described display apparatus may also preferably be applicable to various electronic devices such as an audio/video device, a car navigation device, a game device, a personal computer device, a three-dimensional television and a cellular phone, so as to provide them with a visually recognizable human interface.

According to the first embodiment and the second embodiment, which will be described later, of the display apparatus of the present invention, and the first and second embodiments of the display method of the present invention, the three-dimensional image is obtained between the images displayed on the plurality of display surfaces. In this case, even if the three-dimensional image is discrete, there is substantially or completely no problem. That is, when the image portion is displayed as if it is floating in the air or projecting from the other image portion, discreteness of the image portion causes no problem. However, in these embodiments, it is possible to adopt a non-discrete or continuous three-dimensional display system. In this case, in addition to the display system for displaying the image portion as if it is floating in the air, the non-discrete three-dimensional display system, which is normally applied, but not relevant to the present invention, may be combined with the present invention. Furthermore, in these embodiments, any three-dimensional display system may be applied, as the three-dimensional display system, in addition to a brightness modulation system. Generally, the brightness modulation system involves complicated signal processing, but no specific problem occurs in the present invention, even if the three-dimensional image is discrete. It is therefore advantageous to adopt the discrete three-dimensional display system having a relatively simple signal processing. That is, in this case, it is possible to obtain a merit of reducing the signal-processing load necessary to implement the present invention.

In the mode of the first embodiment of the display apparatus according to the present invention, the image specification device may enables the image portion to be specified based on results of a determination of predetermined items or a conditional branch.

In this mode, when the remaining amount of a tape or memory is determined to be small during the sound or video recording by an audio recorder or video recorder, or when the remaining amount of the tape or memory is determined to be decreased less than a predetermined threshold, thus providing an example of predetermined items, the image portion indicating an "elapsed time" may be specified by the image specification device or an image portion with a "caution/warning message" may additionally be specified by the image generation device, in addition to a normal display. Furthermore, when, as an example of the predetermined items, a user approaches an intermediate destination or a target building, etc., in accordance with a car navigation system, or the user has to make a major change in the driving operation, such as a left-hand turn or right-hand turn, an image portion indicating the "target building, etc." or the "left-hand turn mark" or the "right-hand turn mark" may be specified or an image portion indicating an additionally generated caution/warning message may be specified by the image generation device in addition to the normal display. In this way, the image specification device can specify the image portion based on the determination result or the branch condition (e.g., determination of the remaining amount of tape or determination of the destination, etc., in the above described example) about the predetermined items (e.g., the determination of the remaining amount of tape or determination of the destination, etc., in the above described example). In this way, instead of merely displaying images three-dimensionally, but by giving a certain significance to the position in which the three-dimensional image is to be displayed or by making a change in such a position in accordance with any significance, it is possible to provide a visually recognizable three-dimensional display.

According to another mode of the first embodiment of the display apparatus of the present invention, the image specification device may enable the image portion to be specified through an external input operation.

According to this mode, the image portion is specified through a user's external input operation utilizing the image specification device, which includes the touch screen, etc., and this makes it possible to display the image portion of a button, etc., on the operation panel specified by the user as if it is floating in the air.

In this mode, the image specification device may include at least one of a pointing device, a touch screen superimposed on the three-dimensional display device and a space sensor.

According to this configuration, using, for example, the pointing device such as a mouse makes it possible to specify a desired image portion in the displayed image by moving a cursor, etc. Furthermore, placing the touch screen in front of the display apparatus and pressing the image to be specified on the touch screen, make it possible to select the image. Thus, the operation becomes simpler by the visual sense of the observer and movement of the fingertip. Furthermore, using the space sensor to detect the fingertip indicating the image displayed on the display apparatus or the position of the edge of a pointing member, etc., allows a desired image portion to be specified. As a result, such a display apparatus is preferably applicable to various electronic devices such as an audio/video device, a car navigation device, a game device, a personal computer device, a three-dimensional television and a cellular phone, etc., so as to provide them with a visually recognizable human interface.

In addition to this pointing device, etc., the image specification device may also include a remote controller or various input devices such as a controller, a crisscross key, buttons, and a voice input device.

In another mode of the first embodiment of the display apparatus according to the present invention, the control device may control the three-dimensional display device to display the image portion specified by the image specification device and the image portion associated therewith on said one of the plurality of display surfaces.

In this mode, at least an image portion displayed on the display device is specified by the image specification device, for example, according to the external input operation and the access from the various controllers. Then, the image portion as specified and the other image portion having a preset relationship therewith are displayed on one of the display surfaces, for example, on the front-side display surface placed closest to the observer. On the other hand, images other than the above are displayed on the other display surface, for example, on the rear-side display surface. In this way, a three-dimensional image is obtained between images displayed on the display surfaces placed apart with a certain space on the line of sight of the observer. Furthermore, it is also possible to set the image specification device so as to specify images on any one of the plurality of display surfaces. However, it is preferable to make a setting for the front-side display surface, in view of the fact that the display surface, which is the closest to the observer, provides the most recognizable effects in vision or sense.

In this mode, an example of the image to be displayed is for example the operation panel of an electronic device. When an image for conducting the recording operation is for example specified in the recording/reproducing apparatus, images of operation keys for the recording operation or the other operation keys which can be operated during the recording operation are displayed on the same display surface, while the remaining operation keys, for example, operation keys for only a reproducing operation are displayed as non-operable keys on other display surfaces. Further specifying operation keys that is operable enables the recording operation to be controlled, realizing an recognizable and easily operable operation panel or remote controlled terminal.

Further another mode of the first embodiment of the display apparatus according to the present invention further includes an image selection device for selecting images, which are to be displayed subsequently on the plurality of display surfaces in correspondence with the image portion specified by the image specification device, from images generated by the image generation device, and the control device controls the three-dimensional display device to display at least part of the image as selected on said one of the plurality of display surfaces in place of or in addition to the image portion specified by the image specification device.

According to this mode, at least an image portion displayed on the display device is specified by the image specification device, for example, according to the external input operation and the access from the various controllers. Then, images, which are to be displayed sequentially on a plurality of display surfaces in correspondence with the image portion as specified, are selected by the image selection device from among the images generated by the image generation device. Then, at least part of the selected image is displayed on the one of the plurality of display surfaces, for example, on the front-side display surface closest to the observer. On the other hand, the remaining images are displayed on the other of the plurality of display surfaces, for example, on the rear-side display surface. In this way, a three-dimensional image is obtained between images displayed on the display surfaces placed apart with a certain space on the line of sight of the observer.

In this mode, an example of the image to be displayed is for example the operation panel of an electronic device. When an image for conducting the recording operation is for example specified in the recording/reproducing apparatus, images of operation keys for the recording operation or the other operation keys which can be operated during the recording operation are displayed on the same display surface, while the remaining operation keys, for example, operation keys for only a reproducing operation are displayed as non-operable keys on other display surfaces. Further specifying operation keys that is operable enables the recording operation to be controlled, realizing an recognizable and easily operable operation panel or remote controlled terminal.

In further another mode of the first embodiment of the display apparatus according to the present invention, the image specification device may enable at least part of the image portion, which is displayed on said one of the plurality of display surfaces, to be further specified and disables the image portion displayed on the other display surface from being specified.

According to this mode, of the images displayed three-dimensionally, the image specification device can specify at least part of the image portion displayed on the front-side display surface as if it is floating in the air toward the observer. It is impossible to specify the remaining image portions. Thus, this embodiment is preferably applicable to an electronic device, etc., in particular as a visually recognizable and easily operable operation device.

According to this mode, an example of the image to be displayed is for example the operation panel of an electronic device. When an image for conducting the recording operation is for example specified in an audio/video device, images of operation keys for the recording operation or the other operation keys which can be operated during the recording operation are displayed on the same display surface, while the remaining operation keys, for example, operation keys for only a reproducing operation are displayed as non-operable keys on other display surfaces. Further specifying operation keys that is operable enables the recording operation to be controlled, realizing an recognizable and easily operable operation panel or remote controlled terminal.

In further another mode of the first embodiment of the display apparatus according to the present invention, the control device may generate an operation signal corresponding to the image portion specified by the image specification device.

According to this mode, when the image portion is specified by the image specification device, an operation signal corresponding thereto is generated by the control device. For example, an operation signal for starting the recording is generated corresponding to the recording start button and another operation signal for halting the recording is generated corresponding to the recording stop button. Thus, this embodiment is preferably applicable to an electronic device, etc., as the operation device, which is visually recognizable and easily operable.

In further another mode of the first embodiment of the display apparatus according to the present invention, the control device may control the three-dimensional display device to display part of the image generated by the image generation device on the one of the plurality of display surfaces in an initial state.

According to this mode, it is possible to display, for example, the image portion, which is specifiable as an initial state, on the one of the plurality of display surfaces. Thus, the observer can visually easily recognize which image portion can be specified at the beginning of operation.

The display apparatus according to the second embodiment of the present invention comprises: a three-dimensional display device having a plurality of display surfaces; an image generation device for generating images to be displayed on the three-dimensional display device; and a control device for controlling the three-dimensional display device to display, of the images generated, an image portion determined based on results of a determination of predetermined items or a conditional branch, on one of the plurality of display surfaces and display, of the images generated, an image portion, which is not displayed on said one of the plurality of display surfaces, on another display surface of the plurality of display surfaces.

According to the display apparatus according to the second embodiment, images are displayed on the three-dimensional display device having a plurality of display surfaces, the images are overlapped with one another and the observer watches the image three-dimensionally. The image generation device generates or stores images to be displayed and supplies the images to the three-dimensional display device so that the images are displayed on the respective display surfaces. The image generated by the image generation device is composed of image portions, which are controlled in the minimum image units. There are for example a plurality of or many image portions, these image portions are combined together to form a single frame image and this image is displayed.

Here, under the control of the control device, of the images generated by the image generation device, an image portion determined based on results of a determination of predetermined items or a conditional branch is displayed, for example, on the front-side display surface closest to the observer. On the other hand, under the control of the control device, an image portion, which is not displayed on the above-mentioned display surface, is displayed on the other display surface, for example, the rear-side display surface. The image portion displayed on the other display surface may be an entirety of the images generated by the image generation device, except the image portion displayed on the display surface, or may be part of the entirety thereof. The image portion to be displayed on such a display surface is determined based on a determination result or a conditional branch on the predetermined items concerning various electronic devices ,e.g., the remaining amount of a tape of an audio/video device or the destination of a car navigation device of various electronic devices in which the display apparatus of the present invention is originally or optionally mounted. In this way, the three-dimensional image is obtained between images displayed on the display surfaces placed apart with a certain space on the line of sight of the observer. Furthermore, it is also possible to set the image specification device so as to specify images on any one of the plurality of display surfaces. However, it is preferable to make a setting for the front-side display surface (that is, the display surface, which is closest to the observer), in view of the fact that the display surface, which is the closest to the observer, provides the most recognizable effects in vision or sense.

As a result, the second embodiment does not merely display the images three-dimensionally, but gives a certain significance to the position in which the three-dimensional image is to be displayed or makes a change in such a position in accordance with any significance, thus realizing a visually recognizable three-dimensional display.

In another mode of the first or second embodiment of the display apparatus according to the present invention, the one of the plurality of display surfaces may be placed on a side of an observer.

According to this mode, since the selected image is displayed on the front-side display surface closest to the observer, the observer can obtain the third dimensional image as selected in a floating or projecting state in the air.

In further another mode of the first or second embodiment of the display apparatus according to the present invention, the image portion specified by the image specification device may be displayed with high brightness on the one of the plurality of display surfaces.

According to this mode, the image specified by the image specification device is displayed with high brightness, it is therefore easy for the observer to recognize the image portion as already specified or an image portion, which is next specifiable.

In further another mode of the first or second embodiment of the display apparatus according to the present invention, the image portion specified by the image specification device may be displayed in predetermined colors on the one of the plurality of display surfaces.

According to this mode, the image specified by the image specification device is displayed in predetermined colors such as eye-catching colors such as green, yellow or orange, and it is therefore easy for the observer to recognize the image portion as already specified or an image portion, which is next specifiable..

In further another mode of the first or second embodiment of the display apparatus according to the present invention, the image portion specified by the image specification device may be displayed in an enlarged state under a predetermined magnification on the one of the plurality of display surfaces.

According to this mode, the image specified by the image specification device is displayed in the enlarged state under the predetermined magnification, for example, of 1.2 times to 2 times. It is therefore easy for the observer to recognize the image portion as already specified or an image portion, which is next specifiable.

In further another mode of the first or second embodiment of the display apparatus according to the present invention, the image portion specified by the image specification device may be displayed with light blinking in a predetermined cycle on the one of the plurality of display surfaces.

According to this mode, the image specified by the image specification device is displayed with light blinking in the predetermined cycle. It is therefore easy for the observer to recognize the image portion as already specified or an image portion, which is next specifiable.

In further another mode of the first or second embodiment of the display apparatus according to the present invention, the image portion not specified by the image specification device may be displayed with low brightness on the other display surface.

According to this mode, images other than the image specified by the image specification device are displayed with low brightness, and the contrast in brightness with the specified image increases, thus providing a more effective three-dimensional image. It is also easier to recognize a image portion, which is disabled from being specified next.

In further another mode of the first or second embodiment of the display apparatus according to the present invention, the image portion not specified by the image specification device may be displayed in predetermined colors on the other display surface.

According to this mode, the images not specified by the image specification device are displayed in the predetermined colors, for example, indistinctive colors such as blue or brown. Accordingly, the contrast in colors with the specified image increases and the three dimensional image is obtained more effectively. It is also easier to recognize the image portion, which is disabled from being specified next.

In further another mode of the first or second embodiment of the display apparatus according to the present invention, the image portion not specified by the image specification device may be displayed in a reduced state under a predetermined magnification on the other display surface.

According to this mode, images other than the image specified by the image specification device are displayed in the reduced state under the predetermined magnification. Accordingly, the contrast in size with the specified image increases and the three dimensional image is obtained more effectively. It is also easier to recognize the image portion, which is disabled from being specified next.

In further another mode of the first or second embodiment of the display apparatus according to the present invention, of the plurality of display surfaces, at least the display surfaces other than the rearmost-side display surface comprise semitransparent display devices.

According to this mode, it is possible to watch an image, which is placed behind the front-side display device, therethrough and to insert directly the display device on the line of sight of the observer. Furthermore, it is also relatively easy to perform brightness modulation type three-dimensional display using the plurality of display surfaces.

In further another mode of the first or second embodiment of the display apparatus according to the present invention, the semitransparent display device may be a liquid crystal device or EL (Electro-Luminescence) display device.

According to this mode, it is possible to perform three-dimensional display relatively easily using a semitransparent panel-shaped display device, which include the liquid crystal device or the EL display device.

In further another mode of the first or second embodiment of the display apparatus according to the present invention, the plurality of display surfaces may include composite display surfaces through half-mirrors.

According to this mode, the display surfaces are not directly placed on the line of sight of the observer and composite images are provided through the half-mirrors. Therefore, it is possible to use, as the display device, a display device having no light transmission property, such as a cathode ray tube display device or a plasma display device, etc.

In further another mode of the first or second embodiment of the display apparatus according to the present invention, the plurality of display surfaces of the three-dimensional display devices may disposed in tandem in a direction of a line of sight of an observer.

According to this mode, it is possible to perform the three-dimensional display according to the brightness modulation system in which there is obtained the three-dimensional display, while giving a certain significance to the position in which the three-dimensional image is to be displayed. In this case, there may be carried out a sequential setting of the positions in which the image portions are to be displayed between the plurality of display surfaces, or the depth positions of the image portions, thus providing a smooth three-dimensional display. Alternatively, there may be performed the three-dimensional display discretely or in a binary form (e.g., through only the front-side or rear-side display surface).

In this mode, it is preferable to make a setting for the front-side display surface, i.e., the display surface, which is closest to the observer, in view of the fact that such a closest display surface to the observer provides the most recognizable effects in vision or sense. In addition, placing, for example, the touch screen serving as the image specification device ahead of the front-side display device, makes it possible to provide display in which the image portions such as buttons on the operation panel specified by the user is displayed as if they are floating in the air, thus providing user-friendly effects.

In further another mode of the first or second embodiment of the display apparatus according to the present invention, the three-dimensional display device may be a three-dimensional display device, which utilizes a barrier system having slits or pin-holes, and include an image to be displayed for the left eye of an observer and an image to be displayed for the right eye of the observer, as the plurality of display surfaces.

According to this mode, it is possible to carry out three-dimensional display, while giving a certain significance to display positions, which can visually be recognized by the visual sense of the observer, in the three-dimensional display using parallax according to, for example, the barrier system having slits or pin-holes,. In this case, there may be carried out a sequential setting of the positions in which the image portions are to be displayed between the plurality of display surfaces, thus providing a smooth three-dimensional display. Alternatively, there may be performed the three-dimensional display discretely or in a binary form.

In further another mode of the first or second embodiment of the display apparatus according to the present invention, the three-dimensional display device may be a three-dimensional display device, which utilizes a lenticule system and includes an image to be displayed for a left eye of an observer and an image to be displayed for a right eye of the observer, as the plurality of display surfaces.

According to this mode, it is possible to carry out the three-dimensional display while giving a certain significance to display positions, which can visually be recognized on the line of sight of the observer, in the three-dimensional display using parallax according to a lenticule system. In this case, there may be carried out a sequential setting of the positions in which the image portions are to be displayed between the plurality of display surfaces, thus providing a smooth three-dimensional display. Alternatively, there may be performed the three-dimensional display discretely or in a binary form.

In addition to the three-dimensional display using the plurality of display devices, the three-dimensional display based on the barrier system having slits or pin-holes, or the three-dimensional display based on the lenticule system, this embodiment may be effectively applicable to any three-dimensional display system such as a three-dimensional display system using the conventional liquid crystal shutter-glasses, etc.

The first embodiment of the display method according to the present invention for displaying a three-dimensional image utilizing a display apparatus, which comprises a three-dimensional display device having a plurality of display surfaces and an image specification device for enabling at least part of an image, which is displayed on the three-dimensional display device, to be specified, said method comprises: an image generating step for generating images to be displayed on the three-dimensional display device; and a controlling step for controlling the three-dimensional display device to display, of the images generated, an image portion specified by the image specification device on one of the plurality of display surfaces and display, of the images generated, an image portion, which is not displayed on said one of the plurality of display surfaces, on another display surface of the plurality of display surfaces.

According to the first embodiment of the display method according to the present invention, as in the case of the above described first embodiment of the display apparatus according to the present invention, a certain significance is given to the position in which the three-dimensional image is to be displayed, or a change is made in such a position in accordance with any significance, thus making it possible to provide a visually recognizable three-dimensional image. Furthermore, the above-described display apparatus may also preferably be applicable to various electronic devices such as an audio/video device, a car navigation device, so as to provide them with a visually recognizable human interface.

The second embodiment of the display method according to the present invention for displaying a three-dimensional image utilizing a display apparatus, which comprises a three-dimensional display device having a plurality of display surfaces, said method comprises: an image generating step for generating images to be displayed on the three-dimensional display device; and a controlling step for controlling the three-dimensional display device to display, of the images generated, an image portion determined based on results of a determination of predetermined items or a conditional branch, on one of the plurality of display surfaces and display, of the images generated, an image portion, which is not displayed on said one of the plurality of display surfaces, on another display surface of the plurality of display surfaces.

According to the second embodiment of the display method according to the present invention, as in the case of the above-described second embodiment of the display apparatus according to the present invention, a certain significance is given to the position in which the three-dimensional image is to be displayed, or a change is made in such a position in accordance with any significance, thus making it possible to provide a visually recognizable three-dimensional image.

As described above, the first or second embodiment of the display apparatus or the first or second embodiment of the display method comprises the image generation device or image generating step and the control device or controlling step, respectively. As a result, a certain significance is given to the position in which the three-dimensional image is to be displayed, or a change is made in such a position in accordance with any significance, thus making it possible to provide a visually recognizable three-dimensional image. Furthermore, it is also possible to provide the various electronic devices such as the audio/video device, the car navigation device, etc. with the visually recognizable human interface.

The operations and other advantages of the present invention will become more apparent from the following examples.

### EXAMPLES

With reference now to the attached drawings, examples of the display apparatus according to the present invention will be described below.

### [First example of display apparatus]

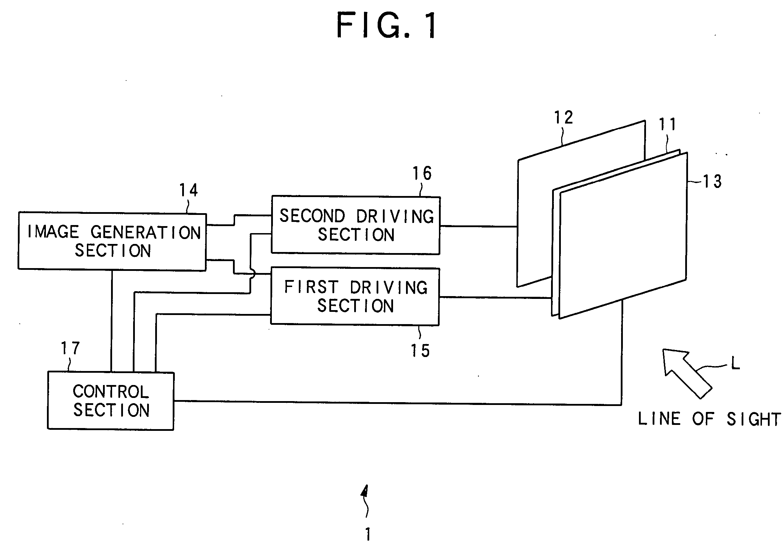

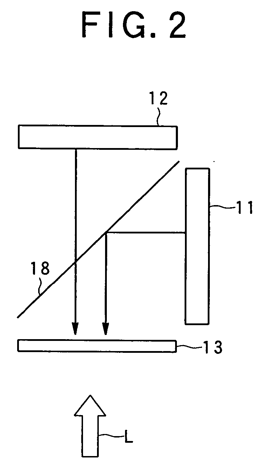

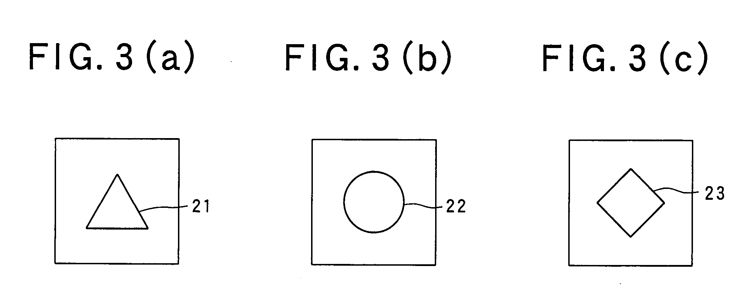

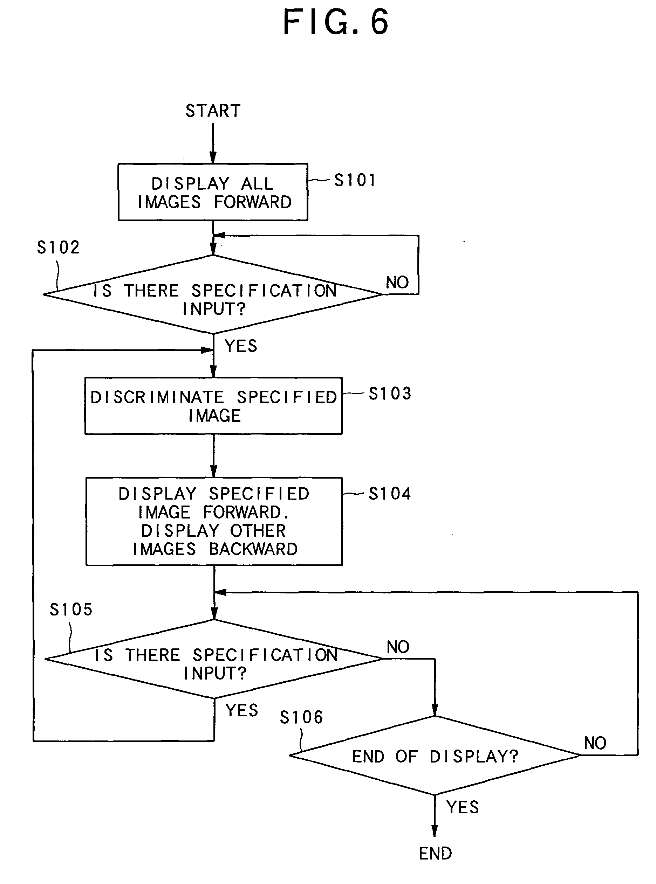

The first example of the display apparatus according to the present invention will be described with reference to FIGS. 1 to 6. FIG. 1 is a block diagram showing a configuration of this example and FIG. 2 shows another configuration of the display section. FIGS. 3(a) to 5(b) illustrate display examples according to the first example. FIG. 6 is a flow chart showing a flow of operations of the first example.

As shown in FIG. 1, a display apparatus 1 is constructed of the first display section 11, the second display section 12 placed behind the first display section 11, a touch screen 13 placed in front of the first display section 11, an image generation section 14 for generating images to be displayed on the first display section 11 and the second display section 12, the first driving section 15 for displaying an image signal from the image generation section 14 on the first display section 11, the second driving section 16 for displaying an image signal from the image generation section 14 on the second display section 12 and a control section 17 for performing overall control of the display apparatus 1.

The first display section 11 and the second display section 12 form a three-dimensional image display section of the display apparatus 1 and are disposed in tandem so as to be apart from each other in a direction of the line of sight "L" from the observer. The first display section 11 is placed on the front side and the second display section 12 is placed on the rear side. A light-transmittable display apparatus, for example, a liquid crystal display apparatus or an EL display apparatus is used as the first display section 11, in order to enable an observer to watch, through the first display section 11, an image on the second display section 12 disposed on the rear side of the first display section 11. On the other hand, the second display section 12 placed on the rear side may be a liquid crystal display apparatus or an EL display apparatus. Alternatively, the second display section 12 may also be a cathode ray tube display apparatus or a plasma display apparatus since it need not have a light-transmittability.

Displaying images on the first display section 11 and the second display section 12 forms a three-dimensional image for an observer having the line of sight "L". Furthermore, control of the brightness makes it possible to give the observer the three dimensional image as if the image exists between the first display section 11 and the second display section 12.

In place of the liquid crystal display apparatus or the EL display apparatus used as the first display section 11, it is also possible to adopt a system in which there is used a cathode ray tube display apparatus or a plasma display apparatus having no light-transmittability. More specifically, as shown in FIG. 2, the first display section 11 is placed with respect to the second display section 12 so as not to interrupt the line of sight "L", a half-mirror 18 is provided on the line of sight L of the observer. The angle of this half-mirror 18 is determined so that the image displayed on the first display section 11 is superimposed on the image displayed on the second display section 12. It is therefore possible to introduce the display apparatus having no light-transmittability into the three-dimensional image display section.

The touch screen 13 is a device to select a predetermined image from among a plurality of images displayed on the first display section 11. A pushing operation on the touch screen 13 with a finger causes information on the selected image to be outputted. Based on this output, images displayed on the first display section 11 and the second display section 12 are controlled and the three-dimensional image is displayed in a desired mode.

In place of the touch screen 13 for selecting the image, there may be used a pointing device such as a mouse, a pointer for pointing an image to be selected, or a space sensor for detecting a spatial position of a fingertip of the observer. Alternatively, the touch screen 13 may be provided so as to correspond to an image displayed on the second display section 12. However, it is preferable to make a setting for the image displayed on the first display section 11, in view of convenience of actual operations.. Moreover, in place of the touch screen 13 for selecting an image, a voice input apparatus may be used to make a selection of an arbitrary portion of the image as displayed.

Furthermore, with respect to the three-dimensional image display section in FIG. 2, the touch screen 13 is provided in front of the half-mirror 18 which forms the composite of the image of the first display section 11 and the image of the second display section 12. The touch sensor of the touch screen 13 may be provided so as to correspond to the image displayed on the first display section 11 or the image displayed on the second display section 12. Furthermore, the touch screen 13 may be substituted by a pointing device.

The image generation section 14 generates and stores images, which are to be displayed on the first display section 11 and the second display section 12. There may be adopted a system in which images inputted externally, for example, images, which have been created through a personal computer, are previously stored in a predetermined storage area and a reading out step from the storage area is carried out as an occasion demand. Images as a unit are controlled independently of one another and can be processed to display them independently. It is possible to independently control not only the issue of whether an image should be displayed on the first display section 11 or the second display section 12, but also issues of the display position, a size, brightness, hue and display mode of the image and an image modification.

The first driving section 15 and the second driving section 16, which are to drive the first display section 11 and the second display section 12, respectively, perform a driving operation for display based on image signals generated by the image generation section 14, for the first display section 11 and the second display section 12. The first driving section 15 and the second driving section 16 may have the function of performing decorative and effective driving such as display timings or blinking based on the control by the control section 17.

The control section 17 performs overall control of the display apparatus 1. With regard to the display of a three-dimensional image, the control section 17 sets display modes of the first display section 11 and the second display section 12, for example, brightness and size based on the image information specified by the touch screen 13 and causes the image generation section 14 to generate image signals to be displayed on the respective display sections. The control section 17 also controls operations of the first driving section 15 and the second driving section 16.

Now, description will be given of the display operation of the display apparatus 1 having the above-described configuration.

There is a presumption, as shown in FIGS. 3(a) to (c), that an image 21 (see FIG. 3(a)), an image 22 (see FIG. 3(b)) and an image 23 (see FIG. 3(c)) are generated or stored by the image generation section 14 as a unit of image to be displayed. These images can be subjected independently to image processing independently. These images are divided into images to be displayed on the first display section 11, on the one hand, and images to be displayed on the second display section 12, on the other hand, according to a command from the control section 17. The thus divided images are inputted to the first display section 11 and the second display section 12 through the first driving section 15 and the second driving section 16, respectively, to provide the displayed images.

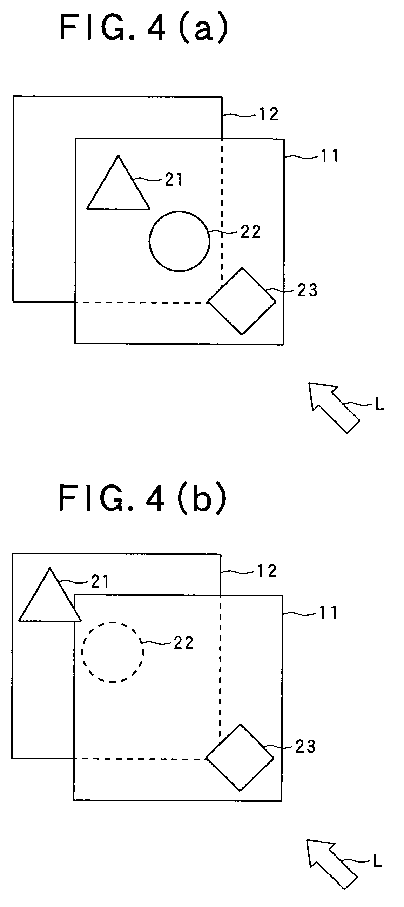

First, there is a presumption that all of the image 21, the image 22 and the image 23 are displayed on the first display section 11 closest to the observer in the initial state as shown in FIG. 4(a). Those display positions are determined according to commands from the control section 17. When the image 23 is specified by the touch screen 13, the control section 17 recognizes this and makes a control so that the image 23 is displayed on the first display section 11 as shown in FIG. 4(b), while the image 21 and the image 22 which have not been specified are displayed on the second display section 12.

Therefore, the image 23 is displayed as if it is floating in the air toward the observer on the line of sight L, while the image 21 and image 22 are displayed in a receded state. This allows the observer to have a feeling in three dimensions. The same applies when the image 21 and image 22 are specified. The position and size of display can be set by the control section 17. Alternatively, all images may be displayed, as the initial state, on the second display section 12, which is disposed on the rear side..

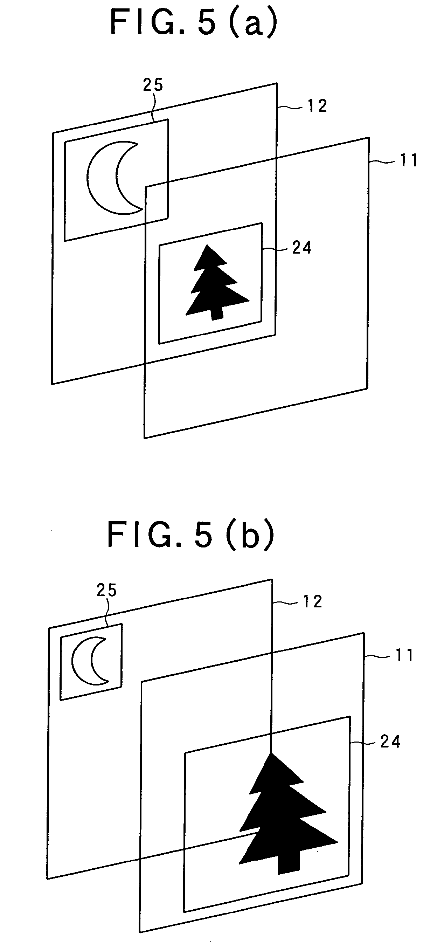

FIGS. 5(a) and 5(b) show realistic display examples. An image 24 and an image 25, which are generated or stored by the image generation section 14 as a unit of images to be displayed, can be subjected independently to an image processing.

First in the initial state, the image 24 and image 25 are displayed on the second display section 12 as shown in FIG. 5(a). When the observer specifies the image 24 in this state, the image 24 is displayed, as shown in FIG. 5(b), on the first display section 11 and the image 25 is kept to be left on the second display section 12 under the control of the control section 17. This makes it possible to provide the three-dimensional image between the image 24 and image 25.

At this time, it is also possible to modify the layout of images, sizes, colors and brightness, etc., under the control of the control section 17 to further obtain visual effects. For example, the image 25 displayed on the second display section 12 is displayed in a reduced size, while the image 24 displayed on the first display section 11 is displayed in an enlarged size. The three-dimensional image can be effectively formed by reducing the brightness of the image 25 and increasing the brightness of the image 24. It is also possible to express an image to be the focus of attention with blinking light or highlighting it. Modification of these images can be automatically performed by a program provided for the control section 17. There may be adopted a configuration to select and carry out the type of modification through input of a command from the outside.

Then, the operation of the display apparatus 1 will be described with reference to the flow chart in FIG. 6.

In FIG. 6, all the images to be displayed are displayed first on the front-side first display section 11 as the initial displaying state(Step S101). All the images may be displayed on the rear-side second display section 12, without displaying them on the first display section 11.

Then, it is determined whether there is any specification input or not (Step S102). This is to detect as whether or not an image to be selected on the touch screen 13 has been specified with respect to the image displayed on the first display section 11. When there is no specification input, the state in which all the images are displayed on the first display section 11 is maintained. On the other hand, if the specification input exists, the specified image is subjected to a discrimination step (Step S103).

Then, the image discriminated in Step S103 is displayed on the front-side first display section 11 and the other image is displayed on the second display section 12 (Step S104). At this time, the respective displayed images may also be modified in various ways.

Then, it is determined in the image display state in Step S104 whether the next image is specified or not (Step S105). If no next image is specified (Step S105: No), it is determined whether the display operation has been completed or not (Step S106). When the display operation has not been completed (Step S106: No), the display apparatus 1 turns back to Step S105 and waits for an input for the next image specification in the image display state in Step S104. On the other hand, if the end of the display operation is indicated (Step S106: Yes), the series of display processes is terminated.

The above described operation flow is shown as an illustrative example, but is not exclusive and there may be used the other operation procedures in which the similar display control is performed.

As described above, the display apparatus 1 in this example enables the observer not only to watch a given three-dimensional image, but also to modify positively the three-dimensional image to watch the modified three-dimensional image.

### [Second example of display apparatus]

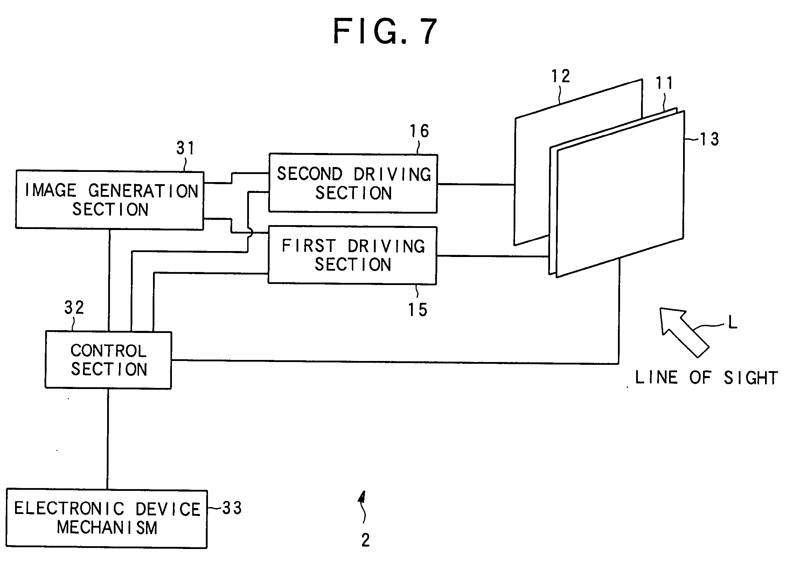

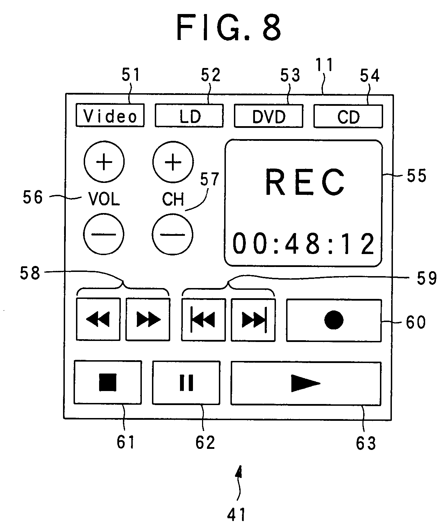

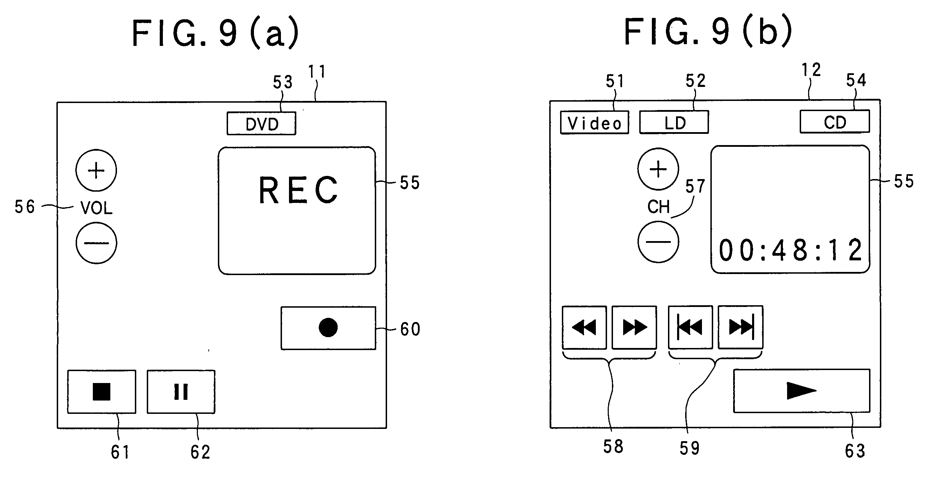

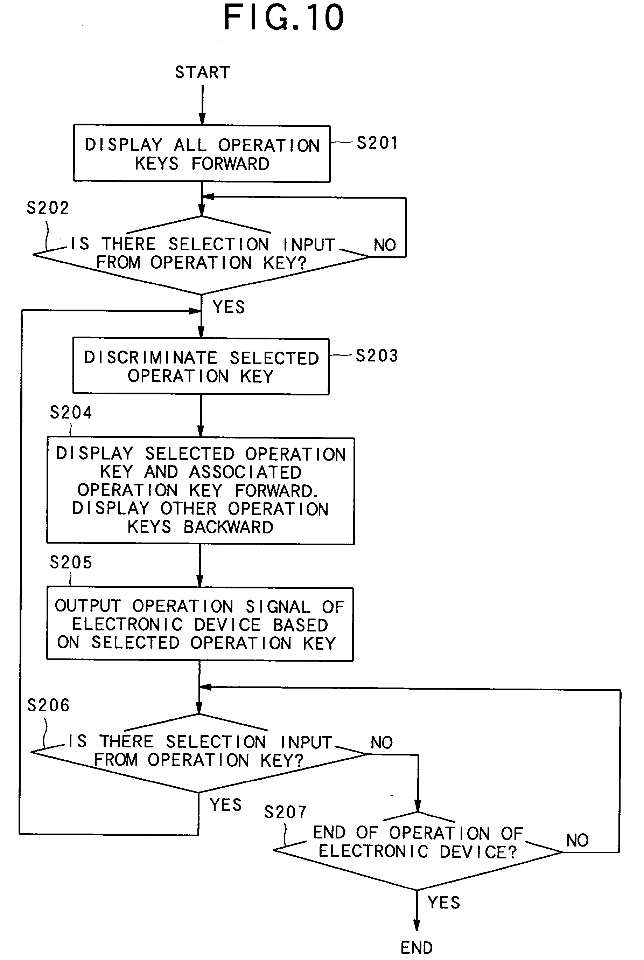

The second example of the display apparatus according to the present invention will be described with reference to FIG. 7 to FIG. 10. This example relates to a configuration of the display apparatus, which is preferably applicable to operations of an electronic device to form an operation panel capable of providing the three-dimensional display. FIG. 7 illustrates a block diagram of the second example of the display apparatus and FIG. 8 and FIGS. 9(a) and 9(b) illustrate display examples of the display apparatus of the second example. FIG. 10 is a flow chart showing a flow of operations of the display apparatus of this example.

As shown in FIG. 7, the display apparatus 2 is constructed of the first display section 11, the second display section 12 placed behind the first display section 11, a touch screen 13 placed in front of the first display section 11, an image generation section 31 for generating images to be displayed on the first display section 11 and the second display section 12, the first driving section 15 for displaying an image signal from the image generation section 31 on the first display section 11, the second driving section 16 for displaying an image signal from the image generation section 31 on the second display section 12 and a control section 32 for performing overall control of the display apparatus 1. Furthermore, a control signal for controlling the electronic device is output from the control section 32 to an electronic device mechanism 33.

The first display section 11 and the second display section 12 form a three-dimensional image display section of the display apparatus 2 and are disposed in tandem so as to be apart from each other in a direction of the line of sight "L" from the observer. The first display section 11 is placed on the front side and the second display section 12 is placed on the rear side. A light-transmittable display apparatus, for example, a liquid crystal display apparatus or an EL display apparatus has to be used as the first display section 11, in order to enable an observer to watch, through the first display section 11, an image on the second display section 12 disposed on the rear side of the first display section 11. On the other hand, the second display section 12 placed on the rear side may be a liquid crystal display apparatus or an EL display apparatus. Alternatively, the second display section 12 may also be a cathode ray tube display apparatus or a plasma display apparatus since it need not have a light-transmittability. Displaying images on the first display section 11 and the second display section 12 forms a three-dimensional image for an observer having the line of sight "L" . Furthermore, control of the brightness makes it possible to give the observer the three dimensional image as if the image exists between the first display section 11 and the second display section 12. In place of the liquid crystal display apparatus or the EL display apparatus used as the first display section 11, it is also possible to adopt a system in which there is used a cathode ray tube display apparatus or a plasma display apparatus having no light-transmittability.

The touch screen 13 is a device to select a predetermined image from among a plurality of images displayed on the first display section 11. A pushing operation on the touch screen 13 with a finger causes information on the selected image to be outputted. Based on this output, images displayed on the first display section 11 and the second display section 12 are controlled and the three-dimensional image is displayed in a desired mode.

In place of the touch screen 13 for selecting the image, there may be used a pointing device such as a mouse, a pointer for pointing an image to be selected, or a space sensor for detecting a spatial position of a fingertip of the observer. Alternatively, the touch screen 13 may be provided so as to correspond to an image displayed on the second display section 12. However, it is preferable to make a setting for the image displayed on the first display section 11, in view of convenience of actual operations.. Moreover, in place of the touch screen 13 for selecting an image, a voice input apparatus may be used to make a selection of an arbitrary portion of the image as displayed.

The image generation section 31 generates and stores images, which are to be displayed on the first display section 11 and the second display section 12. There may be adopted a system in which images inputted externally, for example, images, which have been created through a personal computer, are previously stored in a predetermined storage area and a reading out step from the storage area is carried out as an occasion demand.

Those images include symbol marks related to control of the electronic device or the display section indicating a control state. The images are generated and stored in modes in which they can be controlled independently as a unit and grouped according to the control mode of electronic devices. For example, if the electronic device is a recording/reproducing apparatus, the images are grouped in the form of symbol marks concerning recording or symbol marks concerning reproduction. The images can be subjected independently to an image processing not only as a unit of components of the respective groups, but also in a group unit. It is possible to independently control not only the issue of whether the image is displayed on the first display section 11 or the second display section 12, but also issues of the display position, size, brightness, hue, etc.

The first driving section 15 and the second driving section 16, which are to drive the first display section 11 and the second display section 12, respectively, perform a driving operation for display based on image signals generated by the image generation section 31, for the first display section 11 and the second display section 12. The first driving section 15 and the second driving section 16 may have the function of performing decorative and effective driving such as display timings or blinking based on the control by the control section 17.

The control section 32 performs overall control of the display apparatus 2. With regard to control of the display of a three-dimensional image, the control section 32 sets display modes of the first display section 11 and the second display section 12 based on the detection output of the touch screen 13, and causes the image generation section 31 to generate their respective image signals. The control section 32 also generates signals for controlling the operation of the electronic device mechanism 33 and supplies them to the electronic device mechanism 33 based on the detection output of the touch screen 13.

Now, description will be given of the display operation of the display apparatus 2 having the above-described configuration.

FIG. 8 shows an operation panel 41 for controlling the electronic device. There are displayed images such as the kind of the electronic device to be controlled (reference numerals 51 to 54), operation keys (reference numerals 56 to 63) and an operation display section 55 for displaying operation contents, etc.

FIGS. 9(a) and 9(b) show a state in which the electronic device is actually operating. FIG. 9(a) is an image displayed in the floating state by the first display section 11 and FIG. 9(b) is an image displayed in the receded state by the second display section 12.

First, as shown in FIG. 9(a), the first display section 11 displays that the electronic device to be controlled is a DVD player (see an indicator with the reference numeral "53") and that the operation content is a recording operation (REC) (see an indicator with reference numeral "55"). There are also displayed, as operation keys operable during the recording operation, i.e., a volume controller (VOL) 56, a stop key 61, a pause key 62 and a recording key 60. It is also possible to make the recording key 60 blink, or display it with higher brightness or in a color different from others, in order to emphasize that the recording operation is now carried out. It is also conceivable to display it in an enlarged state under a predetermined magnification.

As shown in FIG. 9(a), in the image displayed on the first display section 11, when the operation for the DVD player is selected (see the indicator with the reference numeral "53") and at the same time the recording key 60 is selected, as shown in FIG. 8, the operation state of the electronic device and the operation keys, which are operable in that operation state, are generated as a group from the image generation section 31 and supplied to the first display section 11. The image generation section 31 controls images to be displayed as a group according to the operation state of the electronic device, that is, operation state such as recording and reproduction.

On the other hand, as shown in FIG. 9(b), the second display section 12 displays images of the electronic devices and the operation keys. which cannot be operated when the recording key 60 is selected and the DVD player is operated for recording (see an indicator with the reference numeral "53"). These images for the electronic devices include for example an indicator 51 for a video player, an indicator 52 for a laser disc player and an indicator 54 for a CD player. The images for the operation keys include channel selection keys 57, fast-forwarding/rewinding keys 58, instant access keys 59 and a reproduction key 63. It is also possible to reduce brightness of the image of the second display section 12 or display the image in a reduced state under a predetermined magnification to provide an effective three-dimensional image for the images of the first display section 11 and the second display section 12 as a display mode.

Here, when the pause key 62 is specified by the observer, the recording operation of the DVD player stops. If the channel can be changed at this time, the channel selection keys 57 also move from the second display section 12 to the first display section 11 and are displayed there. The same applies to other operation keys.

When the stop key 61 is specified by the observer, the recording operation is terminated, and the image shown in FIG. 8 is displayed on the first display section 11, returning to the initial state.

Now, the operation of the display apparatus 2 will be described with reference to the flow chart in FIG. 10.

In FIG. 10, all the images to be displayed are displayed on the front-side first display section 11 in the initial state (Step S201). Alternatively, all the images may be displayed on the rear-side second display section 12, without displaying them on the first display section 11.

Then, it is determined whether there is any selection input thorough any operation key or not (Step S202). From among the images displayed on the first display section 11, an image to be selected is specified by the touch screen 13. When there is no selection input through any operation key (Step S202: No), the state in which all the images are displayed on the first display section 11 is maintained and the display apparatus 2 waits for a selection by any operation key. On the other hand, if there is a selection input through any operation key (Step S202: Yes), the specified image is subjected to a discrimination step (Step S203).

Then, the image discriminated in Step S203 and the image of the operation keys associated therewith are displayed on the front-side first display section 11 and the other images are displayed on the second display section 12 (Step S204). When the DVD player is operated, for example, for recording as shown in FIG. 9(a) , images of the operation keys that are operable are displayed on the first display section 11. At this time, the displayed images may also be modified in various ways. Furthermore, a control signal corresponding to the selected operation key is output to the electronic device mechanism 33 (Step S205).

Then, it is determined whether there is a next selection input through any operation key or not in a state in which the image is displayed according to Step S204 (Step S206). If there is no selection input through any operation key (step S206: No), it is determined whether the operation of the electronic device is terminated or not (Step S207). If the operation is not terminated (Step S207: No), the display apparatus 2 turns back to Step S206 and waits for a next selection through any operation key while maintaining the display state of the image in Step S204. On the other hand, when there is given an instruction to terminate the operation (Step S207: Yes), the series of display processing is terminated.

The above described operation flow is shown as an illustrative example, but is not exclusive and there may be used the other operation procedures in which the similar display control is performed.

As described above, the display apparatus 2 in this example enables the operation keys and their respective operating states to be seen as the three-dimensional images during operation of the electronic device. Furthermore, the display apparatus 2 makes it possible for the observer to easily distinguish the operation contents and the operation keys that is operable in the current operating state of the electronic device, thus facilitating the further operation. Especially, when many electronic devices are controlled by the single remote control device or the operation contents are complicated and the device is provided with many operation keys, the display apparatus 2 makes it easier for the observer to select the operation key, thus being preferably applicable to the operation panel of the device.

In the above-described first and second examples, the three-dimensional image is displayed through the two display devices, i.e., the first and second display sections 11, 12, which are disposed in tandem. Three or more display sections may be disposed in tandem, so as to provide a smoother three-dimensional image. In this case, the control section is provided with driving sections for displaying images on the plurality of display devices and a program for controlling display modes.

### [Third example of display apparatus]

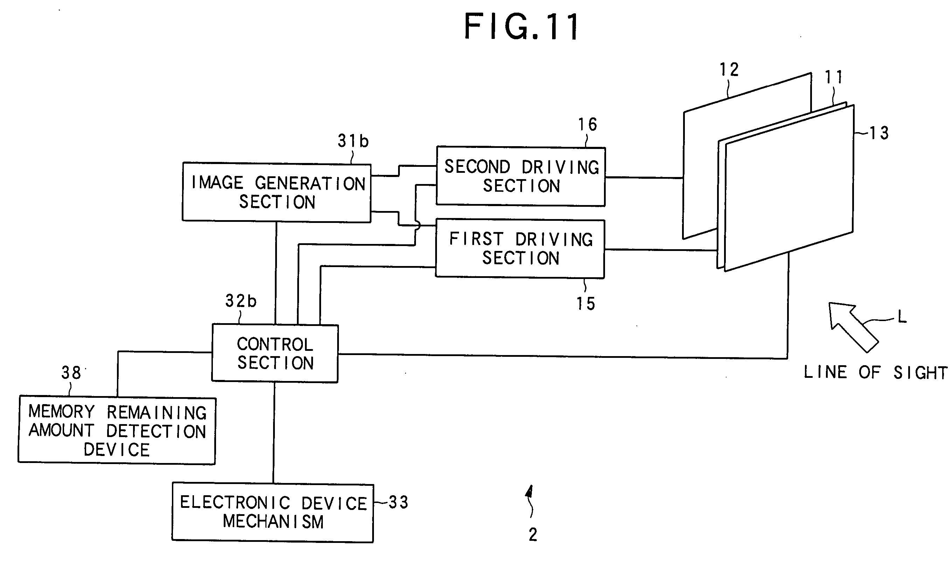

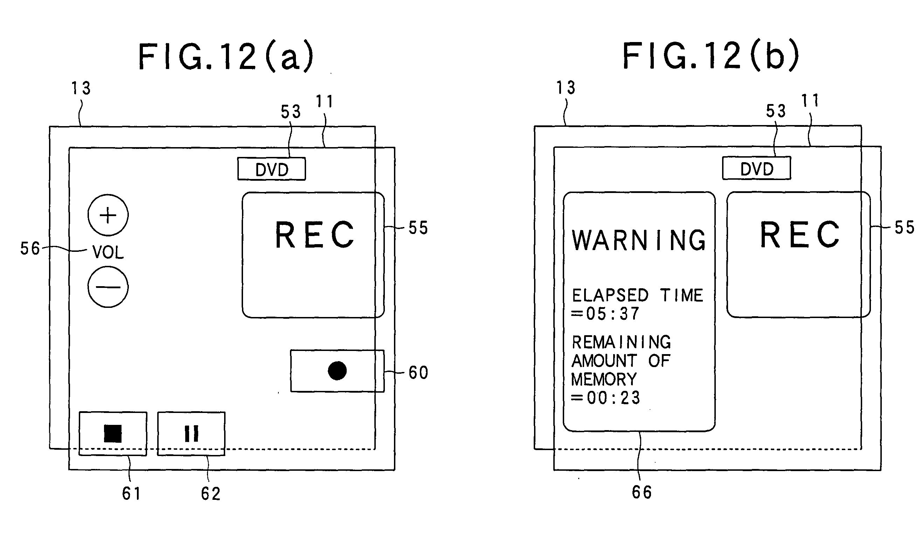

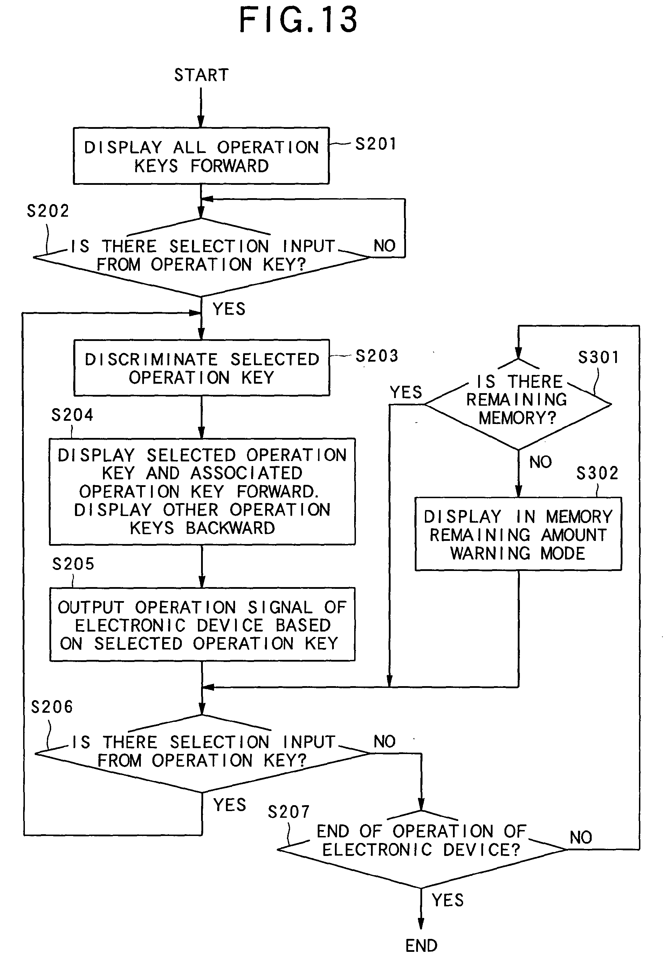

Now, the third example of the display apparatus according to the present invention will be described with reference to FIG. 11 to FIG. 13. This example provides an operation panel in which a certain significance is automatically given to a three-dimensional display according to the operation state of the electronic device, to display the image, irrespective of any particular input operation by the user. FIG. 11 is a block diagram showing the display apparatus according to the third example. FIGS. 12(a) and 12(b) illustrate the display examples in the display apparatus according to the third example of the present invention. FIG. 13 is a flow chart showing a flow of operations of the display apparatus of the third example. The same reference numerals and step number as those in the above described first and second examples are assigned to the components and steps as shown in FIGS. 11 to 13 and their explanations will be omitted.

As shown in FIG. 11, according to the third example, for example, a memory remaining amount detection device 38 for detecting a remaining amount of a memory in a recording apparatus, which records video signals or audio signals, such as a DVD recorder and a tape recorder is connected to a control section 32b. With respect to detection measures in the memory remaining amount detection device 38, various measures may be adopted in accordance with the type of a recording medium used in the recording apparatus. A signal indicating the remaining amount of the memory is inputted from the memory remaining amount detection device 38 to the control section 32b. The control section 32b has, in addition to the functions of the control section 32 as described in the second example of the present invention, an additional function of generating, when the remaining amount of memory detected by the memory remaining amount detection device 38 is smaller than a preset remaining amount of memory, a warning signal of "possibility of a shortage in the remaining amount of memory" during video/audio recording. The image generation section 31b has, in addition to the function of the image generation section 31 in the second example, an additional function of generating an image for a warning message or outputting a pre-stored image for a warning message upon receipt of the warning signal from the control section 32b. In addition, the control section 32b controls, when generating the warning signal, the first driving section 15 and the second driving section 16 so as to make a switching operation for example from the display surface with the indication of the recording operation as shown in FIG. 12(a) to the display surface with the indication of the recording operation and the warning message as shown in FIG. 12(b). The display surface as shown in FIG. 12(a) is the same as that as shown in FIG. 10(a) concerning the second example. The display surface as shown in FIG. 12(b) includes, on the first display section 11, a warning image section 66 indicating the "possibility of a shortage of the remaining amount of memory." The rest of the configuration is the same as that of the above-described second example.

In the flow chart of FIG. 13, the steps of from Step S201 to Step S207 are carried out in the third example of the present invention in the same way as in the second example.

Unless the operation is determined to be terminated in the judgment of Step S207 (Step S207: No), the control section 32b compares the memory remaining amount signal, which is outputted from the memory remaining amount detection device 38, with a predetermined threshold to determine whether the remaining amount of memory is equal to or greater than the predetermined amount (Step S301). It is determined whether the remaining amount is for example equivalent to or greater than 30 minutes in terms of recording time. Such a predetermined threshold may be a preset fixed value or changeable according to the user's setting. As a result of this determination, if there is a certain remaining amount of memory (Step S301: Yes), the display apparatus turns back to Step S206, waits for the next operation key to be selected in the same image display state in Step S204 and repeats the steps of Steps S206, S207, S301 and S302.

On the other hand, if there is no remaining amount of memory in the determination of Step S301 (Step S301: No), the display on the first display section 11 is switched to an image, which includes the warning image section 66 indicating the "possibility of a shortage of the remaining amount of memory" as shown in FIG. 12(b) (Step S302). Then, the display apparatus turns back to Step S206. Then, the display apparatus waits for the next operation key to be selected in the same image display state in Step S302 and repeats the steps of Steps S206, S207, S301 and S302, etc.

Then, when there is given an instruction to terminate the operation (Step S207: Yes), the series of display processing is terminated.

According to the third example described above, the warning image section 66 as shown for example in FIG. 12(b) can be specified as the image portion to be displayed on the first display section 11 based on the result of a determination whether there is a sufficient remaining amount of memory or not (note: such a determination serves as an example of "predetermined items" according to the present invention) or a branch condition according to the comparison with the predetermined amount. Thus, a certain significance is given to the position in which the three-dimensional image is to be displayed, or a change is made in such a position in accordance with any significance, thus making it possible to provide a visually recognizable three-dimensional image, unlike provision of the normal three-dimensional image.

In the third example of the present invention, the display position of the three-dimensional image is changed according to the remaining amount of memory of the recording apparatus such as the DVD recorder, the tape recorder, etc. However, the present invention is not limited only to such a configuration. More specifically, when a user approaches an intermediate destination or a target building, etc., in accordance with a car navigation system, or the user has to make a major change in the driving operation, such as a left-hand turn or right-hand turn, an image portion indicating the "target building, etc." or the "left-hand turn mark" or the "right-hand turn mark" may be specified as an image portion to be displayed on the first display section 11 (i.e., the image portion to be displayed in the floating state). This make is it possible to display timely information, which may become significant according to variations in surrounding environments such as a traveling place, a driving time, a driving situation, etc., in a noticeable way through the three-dimensional display.

### [Fourth example of display apparatus]

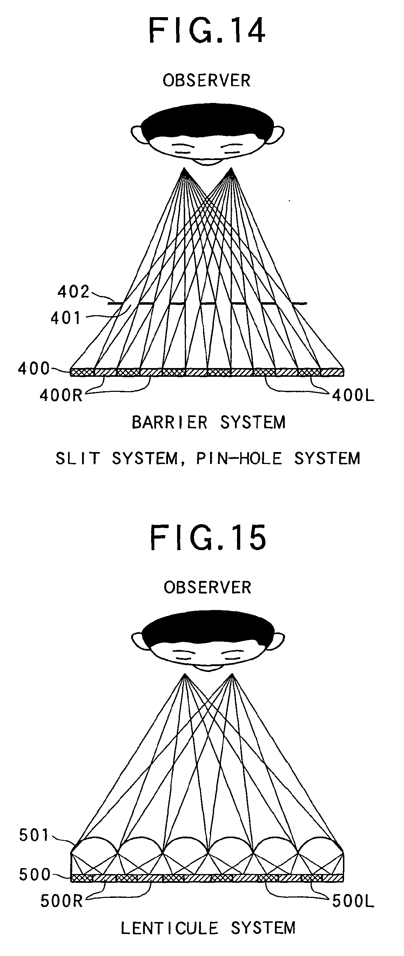

The fourth example of the display apparatus according to the present invention will be described with reference to FIG. 14. In the above-described first to third examples, the three-dimensional display devices are provided in tandem on the line of sight of the observer and the three-dimensional display device is constructed of the plurality of display devices (i.e., the first display section 11 and the second display section 12) each having one corresponding display surface. In the fourth example of the present invention, in place of such a plurality of display devices, there is provided a three-dimensional display device according to a barrier system having slits or pin-holes, which includes an image displayed for the left eye of an observer and an image displayed for the right eye of the observer, as the plurality of display surfaces. FIG. 14 is a schematic descriptive view illustrating the display apparatus according to the fourth example of the present invention, in which the three-dimensional display device utilizing the barrier system having slits or pin-holes is shown diagrammatically in cross section.

In the fourth example, there are provided a display apparatus 400 and a barrier 402, which is disposed in front of the display apparatus 400 and has slits 401, as shown in FIG. 14. Images 400R displayed for the right eye of an observer on the display apparatus 400 come into sight of the right eye of the observer, on the one hand, and images 400L displayed for the left eye of the observer on the display apparatus 400 come into sight of the left eye of the observer, on the other hand, by the action of the barrier 402. The observer recognizes a plurality of display surfaces (that is, one display surface and the other display surface) by parallax. The barrier system having the pin-holes provide the same effect. Accordingly, there can be provided the three-dimensional displays using parallax according to the barrier system having the slits or the pin-holes.

According to the fourth example, a certain significance is given to the position in which the three-dimensional image is to be displayed, or a change is made in such a position in accordance with any significance even in the three-dimensional display utilizing the barrier system having the slits or pin-holes in the same manner as the first to third examples as described above, thus making it possible to provide a visually recognizable three-dimensional image.

### [Fifth example of display apparatus]

The fifth example of the display apparatus according to the present invention will be described with reference to FIG. 15. In the above described first to third examples, the three-dimensional display devices are disposed in tandem on the line of sight of the observer, thus providing an example of a three-dimensional display device, which is constructed of a plurality of display devices each having one corresponding display surface. In the fifth example of the present invention, there is provided, in place of the plurality of display devices, a three-dimensional display device utilizing a lenticule system, which includes images displayed for the left eye of an observer and images displayed for the right eye of the observer, as the plurality of display surfaces. FIG. 15 is a schematic descriptive view illustrating the display apparatus according to the fifth example of the present invention, in which the three-dimensional display device utilizing the lenticule system is shown diagrammatically in cross section.

In the fifth example, there are provided a display apparatus 500 and a lenticule lens 501, which is disposed in front of the display apparatus 500, as shown in FIG. 15. Images 500R displayed for the right eye of an observer on the display apparatus 500 come into sight of the right eye of the observer, on the one hand, and images 500L displayed for the left eye of the observer on the display apparatus 500 come into sight of the left eye of the observer, on the other hand, by the action of the lenticule lens 501. The observer recognizes a plurality of display surfaces (that is, one display surface and the other display surface) by parallax. Accordingly, there can be provided the three-dimensional displays using parallax according to the lenticule system.

According to the fifth example, a certain significance is given to the position in which the three-dimensional image is to be displayed, or a change is made in such a position in accordance with any significance even in the three-dimensional display utilizing the lenticule system in the same manner as the first to third examples as described above, thus making it possible to provide a visually recognizable three-dimensional image.

The present invention is not limited to the above described embodiments and examples , but can be modified appropriately within a scope of the invention without departing from the subject matter or the concept of the present invention which can be understood from the claims and the entire specification. Such modifications of the display apparatus and the methods are also included in the technical idea of the present invention.

As described in detail above, the first example comprises the first and second display sections 11 and 12 serving as the structural example of the plurality of display devices, the image generation section 14 serving as the structural example of the image generation device, the touch screen 13 serving as the structural example of the image specification device, the control section 17 serving as the structural example of the control device and the first and second driving sections 15 and 16 serving as the structural example of the image selection device. The second example comprises the first and second display sections 11 and 12 serving as the structural example of the plurality of display devices, the image generation section 31 serving as the structural example of the image generation device, the touch screen 13 serving as the structural example of the image specification device, the control section 32 serving as the structural example of the control device and the first and second driving sections 15 and 16 serving as the structural example of the image selection device. The third example comprises the first and second display sections 11 and 12 serving as the structural example of the plurality of display devices, the image generation section 31b serving as the structural example of the image generation device, the control section 32b serving as the structural example of the control device and the first and second driving sections 15 and 16 serving as the structural example of the image selection device. The fourth example utilizes the barrier system, which provides the images 400R displayed for the right eye of an observer and the images 400L displayed for the left eye thereof, serving as the structural example of the plurality of display surfaces. The fifth example utilizes the lenticule system, which provides the images 500R displayed for the right eye of an observer and the images 500L displayed for the left eye thereof serving as the structural example of the plurality of display surfaces. Therefore, a certain significance is given to the position in which the three-dimensional image is to be displayed, or a change is made in such a position in accordance with any significance, thus making it possible to apply the display apparatus as a visually recognizable and easily operable operation device to various electronic devices.

## Claims

1. A display apparatus comprising:
a three-dimensional display device having a plurality of display surfaces (11, 12);
an image generation device (14) for generating images to be displayed on the three-dimensional display device;
an image specification device (13) for enabling at least part of an image, which is displayed on the three-dimensional display device, to be specified; and
a control device (17) for controlling the three-dimensional display device to display, of the images generated, an image portion specified by the image specification device (13), on one of the plurality of display surfaces (11, 12) and display, of the images generated, an image portion, which is not displayed on said one of the plurality of display surfaces (11, 12), image portion, on another display surface of the plurality of display surfaces (11, 12).

2. The display apparatus according to claim 1, wherein the image specification device (13) enables the image portion to be specified based on results of a determination of predetermined items or a conditional branch.

3. The display apparatus according to claim 1, wherein the image specification device (13) enables the image portion to be specified through an external input operation.

4. The display apparatus according to claim 3, wherein the image specification device (13) includes at least one of a pointing device, a touch screen, which is superimposed on the three-dimensional display device, and a space sensor.

5. The display apparatus according to any one of claims 1 to 4, wherein the control device (17) controls the three-dimensional display device to display the image portion specified by the image specification device (13) and the image portion associated therewith on said one of the plurality of display surfaces (11, 12).

6. The display apparatus according to any one of claims 1 to 5, further comprising an image selection device for selecting images, which are to be displayed subsequently on the plurality of display surfaces (11, 12) in correspondence with the image portion specified by the image specification device (13), from images generated by the image generation device (14),
wherein the control device (17) controls the three-dimensional display device to display at least part of the image as selected on said one of the plurality of display surfaces (11, 12) in place of or in addition to the image portion specified by the image specification device (13).

7. The display apparatus according to any one of claims 1 to 6, wherein the image specification device (13) enables at least part of the image portion, which is displayed on said one of the plurality of display surfaces (11, 12), to be further specified and disables the image portion displayed on the other display surface from being specified.

8. The display apparatus according to any one of claims 1 to 7, wherein the control device (17) generates an operation signal corresponding to the image portion specified by the image specification device (13).

9. The display apparatus according to any one of claims 1 to 8, wherein the control device (17) controls the three-dimensional display device to display part of the image generated by the image generation device (14) on said one of the plurality of display surfaces (11, 12) in an initial state.

10. A display apparatus comprising:
a three-dimensional display device having a plurality of display surfaces (11, 12);
an image generation device (31) for generating images to be displayed on the three-dimensional display device; and
a control device (32) for controlling the three-dimensional display device to display, of the images generated, an image portion determined based on results of a determination of predetermined items or a conditional branch, on one of the plurality of display surfaces (11, 12) and display, of the images generated, an image portion, which is not displayed on said one of the plurality of display surfaces (11, 12), on another display surface of the plurality of display surfaces (11, 12).

11. The display apparatus according to any one of claims 1 to 10, wherein said one of the plurality of display surfaces (11, 12) is placed on a side of an observer.

12. The display apparatus according to any one of claims 1 to 9, and 11, wherein the image portion specified by the image specification device is displayed with high brightness on the one of the plurality of display surfaces (11, 12).

13. The display apparatus according to any one of claims 1 to 9, and 11, wherein the image portion specified by the image specification device is displayed in predetermined colors on the one of the plurality of display surfaces (11, 12).

14. The display apparatus according to any one of claims 1 to 9, and 11, wherein the image portion specified by the image specification device is displayed in an enlarged state under a predetermined magnification on the one of the plurality of display surfaces (11, 12).

15. The display apparatus according to any one of claims 1 to 9, and 11, wherein the image portion specified by the image specification device is displayed with light blinking in a predetermined cycle on the one of the plurality of display surfaces (11, 12).

16. The display apparatus according to any one of claims 1 to 9, and 11 to 15, wherein the image portion not specified by the image specification device is displayed with low brightness on the other display surface.

17. The display apparatus according to any one of claims 1 to 9, and 11 to 15, wherein the image portion not specified by the image specification device is displayed in predetermined colors on the other display surface.

18. The display apparatus according to any one of claims 1 to 9, and 11 to 15, wherein the image portion not specified by the image specification device is displayed in a reduced state under a predetermined magnification on the other display surface.

19. The display apparatus according to any one of claims 1 to 18, wherein, of the plurality of display surfaces, display surfaces other than at least an rearmost-side display surface comprise semitransparent display devices.

20. The display apparatus according to claim 19, wherein the semitransparent display devices are liquid crystal display devices or Electro-Luminescence display devices.

21. The display apparatus according to any one of claims 1 to 20, wherein the plurality of display surfaces (11, 12) include composite display surfaces through half-mirrors.

22. The display apparatus according to any one of claims 1 to 21, wherein the plurality of display surfaces (11, 12) of the three-dimensional display device are disposed in tandem in a direction of a line of sight of an observer.

23. The display apparatus according to any one of claims 1 to 21, wherein the three-dimensional display device is a three dimensional display device, which utilizes any one of a barrier system having slits or pin-holes, and includes an image to be displayed for a left eye of an observer and an image to be displayed for a right eye of the observer, as the plurality of display surfaces.

24. The display apparatus according to any one of claims 1 to 21, wherein the three-dimensional display device is a three-dimensional display device, which utilizes a lenticule system and includes an image to be displayed for a left eye of an observer and an image to be displayed for a right eye of the observer, as the plurality of display surfaces.

25. A method for displaying a three-dimensional image utilizing a display apparatus, which comprises a three-dimensional display device having a plurality of display surfaces and an image specification device for enabling at least part of an image, which is displayed on the three-dimensional display device, to be specified, said method comprising:
an image generating step for generating images to be displayed on the three-dimensional display device; and
a controlling step for controlling the three-dimensional display device to display, of the images generated, an image portion specified by the image specification device on one of the plurality of display surfaces and display, of the images generated, an image portion, which is not displayed on said one of the plurality of display surfaces, on another display surface of the plurality of display surfaces.

26. A method for displaying a three-dimensional image utilizing a display apparatus, which comprises a three-dimensional display device having a plurality of display surfaces, said method comprising:
an image generating step for generating images to be displayed on the three-dimensional display device; and
a controlling step for controlling the three-dimensional display device to display, of the images generated, an image portion determined based on results of a determination of predetermined items or a conditional branch, on one of the plurality of display surfaces and display, of the images generated, an image portion, which is not displayed on said one of the plurality of display surfaces, on another display surface of the plurality of display surfaces.
